# EUROPÄISCHE PATENTSCHRIFT

(11) **EP 3 315 241 B1**
(45) Veröffentlichungstag und Bekanntmachung des Hinweises auf die Patenterteilung: **06.05.2020**
(21) Anmeldenummer: 17197944.6
(22) Anmeldetag: 24.10.2017
(51) Int. Cl.: B23K 26/00, B23K 26/12, B23K 26/14, B23K 26/142

(54) **LASERBEARBEITUNGSGERÄT**
LASER PROCESSING DEVICE
APPAREIL DE TRAITEMENT LASER

(30) Priorität: 31.10.2016 DE 102016120777; 15.11.2016 DE 102016121911
(43) Veröffentlichungstag der Anmeldung: 02.05.2018
(73) Patentinhaber: mobil-mark GmbH, 89075 Ulm (DE)
(72) Erfinder: Baeger, Holm, 89134 Blaustein (DE); Diesterhaupt, Frank, 89075 Ulm (DE)
(74) Vertreter: Baur & Weber Patentanwälte PartG mbB

(56) Entgegenhaltungen:
- EP-A2- 2 564 977
- DE-A1- 3 923 829
- DE-A1-102014 004 011
- GB-A- 2 342 883
- US-A1- 2001 002 287
- US-A1- 2016 121 427

## Beschreibung

Die Erfindung betrifft ein Laserbearbeitungsgerät zur Bearbeitung von Werkstückoberflächen.

Ein Laserbearbeitungsgerät zur Bearbeitung von Werkstückoberflächen, insbesondere zur Erzeugung von Beschriftungen auf Werkstückoberflächen ist z. B. aus der DE 100 59 246 C2 bekannt. In einem im Betrieb handführbaren Gerätekopf ist ein optisches System zur Fokussierung eines Laserstrahls auf der Werkstückoberfläche und zur zweidimensionalen Schwenkung des Laserstrahls quer zur Strahlachse untergebracht. Das optische System kann insbesondere eine Fokussierlinse und eine Schwenkspiegelanordnung enthalten.

Der aus dem optischen System austretende Laserstrahl ist von einer Abdichthaube umgeben, welche mit einer dem Gerätekopf abgewandten Anlagekante für den Bearbeitungsvorgang an die Werkstückoberfläche angelegt und gegen das Werkstück gedrückt wird. Dabei dichtet eine umlaufende gummielastische Dichtung den Innenraum der Abdichthaube gegen das Austreten von Laserlicht und gegen das Austreten von bei der Bearbeitung anfallenden Abgasen und Partikeln ab. Der Innenraum der Glocke wird vorteilhafterweise mittels einer Gasabführeinrichtung mit Gas, welches auch Umgebungsluft sein kann, durchspült, um die genannten Abgase und Partikel unschädlich für den Benutzer abzuführen. Bei der Anlagekante sind zusätzlich mehrere Schalter einer Sicherheitsschaltereinrichtung angeordnet, welche durch ordnungsgemäßes Andrücken der Anlagekante der Abdichthaube an die Werkstückoberfläche betätigt werden und gewährleisten, dass der Innenraum der Abdichthaube auf Werkstückseite korrekt abgedichtet ist und dass ein richtiger Abstand der Werkstückoberfläche von dem optischen System eingestellt ist.

Ein solches Laserbearbeitungsgerät kann für unterschiedliche Werkstücke z. B. nach Geometrie oder Ausrichtung verschiedene Abdichthauben erfordern.

So ist aus der EP 2 564 977 A2 ein für die Verwendung verschiedener Abdichthauben verbessertes Laserbearbeitungsgerät gemäß dem Oberbegriff von Anspruch 1 offenbart. Bei diesem Laserbearbeitungsgerät ist zwischen einem Gerätekopf und einer Abdichthaube eine Verbindungseinheit angeordnet, welche Sicherheitsschaltereinrichtungen und zumindest einen Teil einer Gasabführeinrichtung enthält. Die Abdichthaube ist von der Verbindungseinheit lösbar ausgebildet. Durch die Anordnung der Sicherheitsschaltereinrichtung und eines Teils der Gasabführeinrichtung in einer Verbindungseinheit zwischen der Abdichthaube und den das optische System enthaltenden Gerätekopf kann vorteilhafterweise die Abdichthaube selbst konstruktiv einfach gehalten sein, was bei einem System mit mehreren auswechselbaren Abdichthauben zu besonderen Kostenvorteilen und zu einer vereinfachten Handhabung beim Wechsel von Abdichthauben führt.

Neben Geräten zur Laserbeschriftung sind auch Geräte zur umformenden Laserbearbeitung wie Laserschneider oder Laserbohrer bekannt. So ist aus der GB 23 42 883 A ist eine Vorrichtung bekannt, bei der unterhalb einer Haube eines Laserbearbeitungsgerätes ein Gasstrom zweier Gaszuführungen so abgegeben wird, dass bei der Laserbearbeitung herausspritzende Werkstoffpartikel über den Gasstrom abgetragen werden und sich nicht auf dem Werkstück ansammeln. Das verwendete Gas kann außerdem verwendet werden um chemische Reaktionen zu hemmen oder zu begünstigen.

Der vorliegenden Erfindung liegt die Aufgabe zugrunde, ein verbessertes Laserbearbeitungsgerät der gattungsgemäßen Art anzugeben.

Diese Aufgabe wird durch den unabhängigen Patentanspruch 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Laserbearbeitungsgerät zur Bearbeitung der Oberfläche eines Werkstücks mittels eines Laserstrahls geschaffen, umfassend einen Gerätekopf mit einer optischen Einheit zur Abbildung eines Laserstrahls auf eine Werkstückoberfläche, eine Basisstation, die über elektrische und fluidführende Versorgungsleitungen den Gerätekopf mit Betriebsmitteln versorgt, eine Abdichthaube, welche an dem Gerätekopf gehalten und mit einer umlaufenden Anlagekante an die Wertestückoberfläche anlegbar ist, und eine Sicherheitsschaltereinrichtung, welche durch Andrücken der Abdichthaube an die Werkstückoberfläche betätigbar ist, wobei eine erste Gaszuführeinrichtung eine erste Gas oder Gasgemisch in ein seitlich von der Abdichthaube begrenztes Volumen oberhalb der Werkstückoberfläche zuführt, eine zweite Gaszuführeinrichtung ein zweites Gas oder Gasgemisch in einen Bereich oberhalb des von der Abdichthaube begrenzten Volumens zuführt und eine Gasabführeinrichtung im Bereich des von der Abdichthaube begrenzten Volumens das erste und/oder das zweite Gas oder Gasgemisch abführt.

Demnach wird ein Laserbearbeitungsgerät geschaffen, bei dem im Bereich der Abdichthaube ein kleines Prozessvolumen vorliegt, das mittels der ersten Gaszuführeinrichtung im Bereich oberhalb der Werkstückoberfläche mit einem ersten Gas oder Gasgemisch befüllt werden kann. Auf der der Werkstückoberfläche abgewandten Seite wird erfindungsgemäß über eine zweite Gaszuführeinrichtung ein zweites Gasgemisch zugeführt, was insbesondere dafür sorgt, dass das erste Gasgemisch den Bereich oberhalb der Werkstückoberfläche nicht in Richtung des Gerätekopfes verlassen kann. Der Bereich zwischen der Basisstation und dem Gerätekopf kann mit dem zweiten Gas oder Gasgemisch vollständig gefüllt sein, so dass das kleine Prozessvolumen oberhalb der Werkstückoberfläche zügig ausgetauscht werden kann, falls dort eine andere Gasart oder ein anderes Gasgemisch befüllt werden soll. Somit ist es möglich, die bei der erfindungsgemäßen Beschriftung einer Werkstückoberfläche mittels eines Lasers auftretenden Reaktionen bei Bildung eines Plasmas zu steuern, so dass die Farbgebung der Laserbeschriftung einstellbar ist. So ist es insbesondere möglich, eine oxidfreie Ausgestaltung des Prozessvolumens zu schaffen, so dass bei der Beschriftung der Oberfläche eines Werkstücks kein Abbrand auftritt, der beispielsweise bei metallischen Oberflächen eine bräunliche Färbung aufweist. Das erste Gas oder Gasgemisch wird erfindungsgemäß zur Einstellung der gewünschten Oberflächeneigenschaften im Prozessvolumen verwendet, während das zweite Gas erfindungsgemäß zur Kühlung des Laserbearbeitungsgeräts sowie zur Bildung eines Gegendrucks im Bereich oberhalb des Prozessvolumens eingesetzt wird. Da ein Wechsel im Prozessvolumen nur einen kleinen Teil des Gesamtsystems betrifft, ist kein langer Spülvorgang nötig, so dass zwischen verschiedenen Oberflächeneigenschaften einfach und ohne große Wartezeit hin und her geschaltet werden kann. Im Prozessvolumen entstehende Reaktionsprodukte werden über die Gasabführeinrichtung vom Gerätekopf zur Basisstation gebracht, wobei diese dort auf unterschiedliche Weise weiterverarbeitet werden können. Demnach wird sicher gestellt, dass die entstehenden Reaktionsprodukte zuverlässig abgeführt werden und entstehende Reaktionswärme ebenfalls über die Gasströme entfernt wird.

Gemäß einer Ausführungsform der Erfindung ist das erste Gas oder Gasgemisch Sauerstofffrei oder umfasst ein inertes Gas oder Gasgemisch, insbesondere Stickstoff, Argon oder dergleichen.

Insbesondere Stickstoff als inertes Gas ermöglicht es, die ansonsten auftretende bräunliche Verfärbung bei Laserbeschriften einer metallischen Oberfläche durch eine oxidfreie Prozessführung so abzuändern, dass eine nahezu schwarze Oberfläche beim Laserbeschriften erreicht werden kann. Insbesondere werden Stahloberflächen beim Laserbeschriften unter einer Stickstoffatmosphäre wesentlich weniger anfällig bezüglich Korrosion, was bei hygienesensiblen Branchen oftmals den Einsatz von Laserbeschriftungen verunmöglicht. Darüber hinaus ist auch die optische Ausgestaltung bei korrodierten Beschriftungsflächen oftmals störend und sollte daher vermieden werden. Aufgrund des geringen Prozessvolumens ist der Bereich oberhalb der Werkstückoberfläche zügig mit einer Stickstoffatmosphäre zu versehen.

Gemäß einer weiteren Ausführungsform der Erfindung umfasst das zweite Gas oder Gasgemisch Luft.

Das zweite Gas oder Gasgemisch wird erfindungsgemäß neben der Kühlung auch zur Bildung eines Gegendrucks verwendet, so dass das erste Gas oder Gasgemisch in Richtung der Werkstückoberfläche gedrückt wird. Aus Kostengründen bietet es sich an, hier mit Umgebungsluft zu arbeiten, was geringe Anforderungen an die verwendeten Komponenten des erfindungsgemäßen Laserbearbeitungsgeräts stellt.

Gemäß einer weiteren Ausführungsform der Erfindung sind die erste Gaszuführeinrichtung mit einer ersten Schlauchleitung und die Gasabführeinrichtung mit einer zweiten Schlauchleitung versehen, die im Inneren eines als Zuführung des zweiten Gases oder Gasgemisches dienenden Schlauchs zwischen Basisstation und Gerätekopf geführt sind.

Der Gerätekopf und die Basisstation sind mittels eines Schlauchs verbunden, in dem nun neben der eigentlichen Funktion der Zuführung des zweiten Gases oder Gasgemisches noch die Gaszuführ- und die Gasabführeinrichtung in Form von Schlauchleitungen geführt werden, wobei aufgrund der nur geringen Fördermengen relativ dünne Schläuche verwendet werden können, so dass der Querschnitt des Schlauchs nicht übermäßig eingeschränkt wird. Daher lässt sich die Erweiterung auf zwei Gase oder Gasgemische ohne großen Aufwand durchführen.

Gemäß einer weiteren Ausführungsform der Erfindung ist die erste Schlauchleitung mit einem in der Basisstation angeordneten Reservoir oder Gasgenerator oder mit einem Anschluss für ein externes Reservoir verbunden.

Die Zuführung des ersten Gases oder Gasgemisches kann entweder mittels eines Reservoirs, beispielsweise einer unter Druck stehenden Flasche erfolgen. Es kann aber auch innerhalb der Basisstation ein Gasgenerator eingesetzt werden, der die Umgebungsluft so verarbeitet, dass z. B. lediglich Stickstoff über die erste Schlauchleitung in Richtung des Gerätekopfs geleitet wird. Desweiteren ist es ebenfalls möglich, einen Anschluss zu verwenden, der die Basisstation mit einem externen Reservoir verbindet. Die beiden erstgenannten Variationen bieten sich insbesondere bei der Ausgestaltung des Laserbearbeitungsgerätes als mobile Vorrichtung an.

Gemäß einer weiteren Ausführungsform der Erfindung ist der Schlauch mit einer in der Basisstation angeordneten Pumpe verbunden.

Bei der Verwendung von Umgebungsluft ist es ohne weiteres möglich, den Schlauch zur Luftzuführung über eine in der Basisstation angeordnete Pumpe mit Umgebungsluft zu versorgen.

Gemäß einer weiteren Ausführungsform der Erfindung ist zwischen der Pumpe und dem Schlauch eine zuschaltbare Druckreduziereinheit angeordnet.

Um den bereits oben erwähnten Gegendruck einstellen zu können, ist im Betrieb mit Zuführung zweier Gasgemische eine Druckreduziereinheit zuschaltbar, die den Gegendruck entsprechend einstellen kann.

Gemäß einer weiteren Ausführungsform der Erfindung ist die Pumpe bidirektional ausgeführt.

Demnach ist es möglich, vor Beginn der Laserbearbeitung ein kurzes Absaugen vorzunehmen, um das Gas im Volumen oberhalb des Werkstücks auszutauschen oder zu beeinflussen. Durch den so entstehenden Unterdruck wird darüber hinaus der Gerätekopf des Laserbearbeitungsgeräts fest an das Werkstück gepresst. Ebenso ist ein nahezu vollständiges Evakuieren zur Bildung eines Vakuums denkbar. Das Betreiben der Pumpe kann auch im Pulsbetrieb erfolgen, wobei hier sowohl die Pumpleistung als auch die Pumprichtung gepulst sein können.

Gemäß einer weiteren Ausführungsform der Erfindung bewirkt eine Betätigung der Sicherheitsschaltereinrichtung und ein Starten des Laserstrahls ein Spülen des von der Abdichthaube begrenzten Volumens mit dem ersten Gas oder Gasgemisch und/oder dem zweiten Gas oder Gasgemisch.

Das Zuführen des ersten Gases oder Gasgemisches und/oder des zweiten Gases oder Gasgemisches kann mit der Betätigung der Sicherheitsschaltereinrichtung kombiniert werden, so dass je nach gewünschter Prozessführung unterschiedliche Gase beim Aufsetzen auf ein Werkstück zugeführt werden können. So ist es denkbar, zuerst ein Spülen mit dem zweiten Gas vorzunehmen, an das sich die Zufuhr des ersten Gases mit druckreduzierten zweitem Gas anschließt. Nachdem die Laserbearbeitung abgeschlossen wurde, kann wiederum ein vordefiniertes Programm mit Zu-/Abschalten einzelner Gase vorgenommen werden. Das Zuführen des ersten Gases oder Gasgemisches und/oder des zweiten Gases oder Gasgemisches sowie das Aktivieren des Laserstrahls können insbesondere mit einer einstellbaren Verzögerung erfolgen, um die gewünschte Prozessführung beim Aufsetzen auf ein Werkstück abzuarbeiten.

Gemäß einer weiteren Ausführungsform der Erfindung ist die erste Schlauchleitung an wenigstens einem Vorratsbehälter entlang geführt, der dem ersten Gas oder Gasgemisch Feststoffpartikel, vorzugsweise Nanopartikel, zusetzen kann. Demnach ist es vorgesehen, dass das vorbeiströmende erste Gas oder Gasgemisch aufgrund des dadurch entstehenden Unterdrucks beim Vorbeiströmen an einem Vorratsbehälter insbesondere Nanopartikel mitführt, die dann über die erste Schlauchleitung in das Prozessvolumen gebracht werden. Dort kann bei einer Laserbeschriftung der Laserstrahl ein Anhaften der Nanopartikel an der metallischen Oberfläche bewirken, so dass beispielsweise eine farbige Beschriftung geschaffen werden kann.

Gemäß einer weiteren Ausführungsform der Erfindung sind mehrere Vorratsbehälter zuschaltbar mit der ersten Schlauchleitung verbindbar.

Demnach wird das soeben beschriebene Konzept erweitert, indem mehrere Vorratsbehälter vorgesehen sind, so dass beispielsweise auch eine mehrfarbige Prozessführung oder ein Mischen mehrerer Farben denkbar wäre.

Gemäß einer weiteren Ausführungsform der Erfindung umfasst die zweite Schlauchleitung eine Filtereinheit, die mit einem Luftauslass an der Basisstation verbunden ist.

Insbesondere bei der Verwendung von Nanopartikeln ist es wünschenswert, dass diese nicht über den Luftablass in die Umgebungsluft gelangen. Ebenso wäre es aber denkbar, auch Gasbestandteile bei der Gasabführung über die zweite Schlauchleitung in der Filtereinheit zurückzugewinnen.

Gemäß einer weiteren Ausführungsform der Erfindung umfasst die zweite Schlauchleitung eine Auffangeinheit, die ein Fluid oder Feststoffpartikel vor Zuführen an einen Luftauslass an der Basisstation entfernt.

Da insbesondere Nanopartikel aufgrund ihrer hohen Kosten nicht nur gefiltert sondern auch wieder verwendet werden sollen, ist es vorteilhaft, die Partikel entsprechend in der Auffangeinheit aus dem Abluftstrom zu entfernen.

Gemäß einer weiteren Ausführungsform der Erfindung ist die Laserbearbeitung so steuerbar, dass für eine Beschriftung eine Farbe auswählbar ist.

Aufgrund der zügigen Umschaltbarkeit zwischen unterschiedlichen Gasen oder der Zuschaltbarkeit unterschiedlicher Zusatzstoffe kann für eine Beschriftung eine bestimmte Farbe ausgewählt werden. Demnach ist es möglich, in sukzessiven Beschriftungsvorgängen unterschiedliche Farben auszuwählen, so dass je nach Einsatzgebiet eine entsprechende Farbgebung erreicht wird.

Gemäß einer weiteren Ausführungsform der Erfindung ist die Laserbearbeitung so steuerbar, dass für eine Beschriftung mehrere Farben auswählbar sind.

In Erweiterung des soeben beschriebenen Konzeptes ist es auch möglich, dass innerhalb eines Beschriftungsvorgangs zwischen unterschiedlichen Farben umgeschaltet werden kann, so dass eine mehrfarbige Prozessführung erreicht wird.

Gemäß einer weiteren Ausführungsform der Erfindung ist die erste Schlauchleitung mit einem Sicherheitsventil oder Relais versehen.

Insbesondere bei der Verwendung von sicherheitsrelevanten Gasen ist es vorgeschrieben, die Zufuhr bei Vorliegen entsprechender sicherheitsrelevanter Aspekte zu stoppen. Dazu kann das Sicherheitsventil oder Relais verwendet werden, das beispielsweise dafür sorgt, dass nach einer vorher bestimmten Zeit oder in Abhängigkeit der Druckverhältnisse im Gerätekopf eine Unterbrechung der Gaszufuhr bewirkt wird.

Nachfolgend werden einige Ausführungsbeispiele anhand der Zeichnungen näher erläutert. Es zeigen:
- Fig. 1: ein erfindungsgemäßes Laserbearbeitungsgerät in einer Schrägansicht,
- Fig. 2: ein Detail des Laserbearbeitungsgeräts aus Fig. 1 in einer Schnittansicht,
- Fig. 3: ein weiteres Detail des Laserbearbeitungsgeräts aus Fig. 1 in einer Schnittansicht,
- Fig. 4: eine schematische Ansicht eines Teils eines Laserbearbeitungsgeräts, und
- Fig. 5: eine weitere schematische Ansicht eines Teils eines Laserbearbeitungsgeräts.

In den Figuren sind gleiche oder funktional gleich wirkende Bauteile mit den gleichen Bezugszeichen versehen.

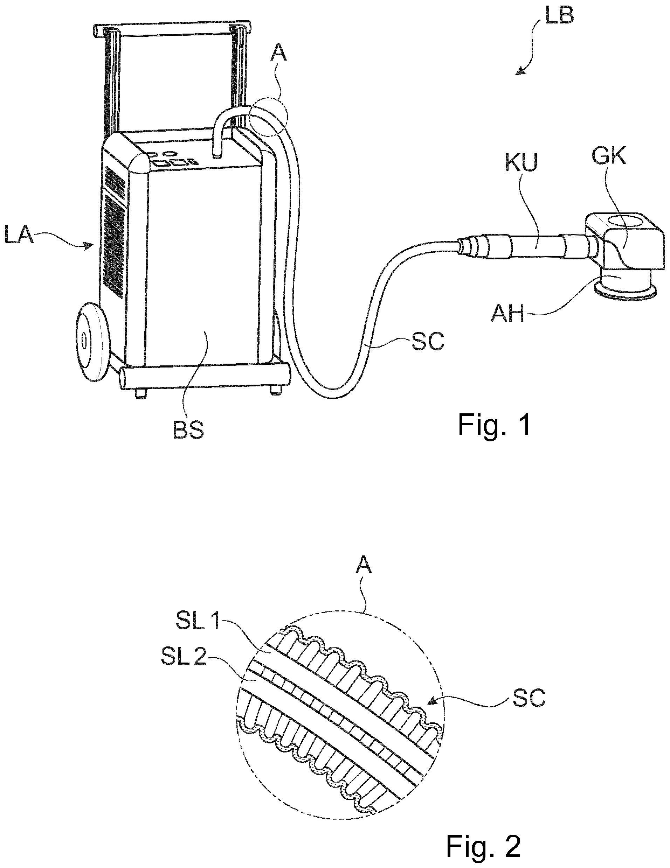

In Fig. 1 ist ein Laserbearbeitungsgerät LB gezeigt, das in einer mobilen Ausführung aus einer Basisstation BS und einem Gerätekopf GK gebildet wird. Die Verbindung zwischen Basisstation BS und Gerätekopf GK erfolgt über einen Schlauch SC, der beispielsweise über eine Kupplung KU mit dem Gerätekopf GK gekoppelt werden kann. Über den Schlauch SC erfolgt eine Versorgung des Gerätekopfs GK mit Betriebsmitteln, wozu im Inneren des Schlauchs SC elektrische und fluidführende Versorgungsleitungen angebracht sind. Die Basisstation BS weist darüber hinaus auf einer Gehäuseseite einen Luftauslass LA auf.

Der Gerätekopf GK ist mit einer Abdichthaube AH versehen, so dass über die Abdichthaube AH der Gerätekopf GK auf eine Werkstückoberfläche angelegt werden kann. Durch Aufsetzen des Gerätekopfs GK auf die Werkstückoberfläche wird die Laserbearbeitung aktiviert. Ein derartiger Aufbau ist an sich aus dem Stand der Technik bekannt. Für die Erfindung relevant ist jedoch die Zuführung bzw. Abführung von gasförmigen Betriebsmitteln über den Schlauch SC, wie nachfolgend detaillierter erläutert werden wird. Das Innere des Schlauchs SC ist schematisch in dem mit dem Buchstaben A gekennzeichneten Detail in Fig. 1 gezeigt. Das Detail A ist in Fig. 2 vergrößert dargestellt.

Fig. 2 zeigt einen Querschnitt durch den Schlauch SC, aus dem beispielhaft hervorgeht, dass zwischen Basisstation BS und Gerätekopf GK eine erste Schlauchleitung SL1, eine zweite Schlauchleitung SL2 vorgesehen sein kann. Weitere elektrische Versorgungsleitungen werden ebenfalls im Inneren des Schlauchs SC geführt, diese sind aber zur Verdeutlichung nicht eingezeichnet. Der verbleibende Freiraum im Inneren des Schlauchs SC dient ebenfalls als Zuführung von Gas, beispielsweise als Luftzuführung.

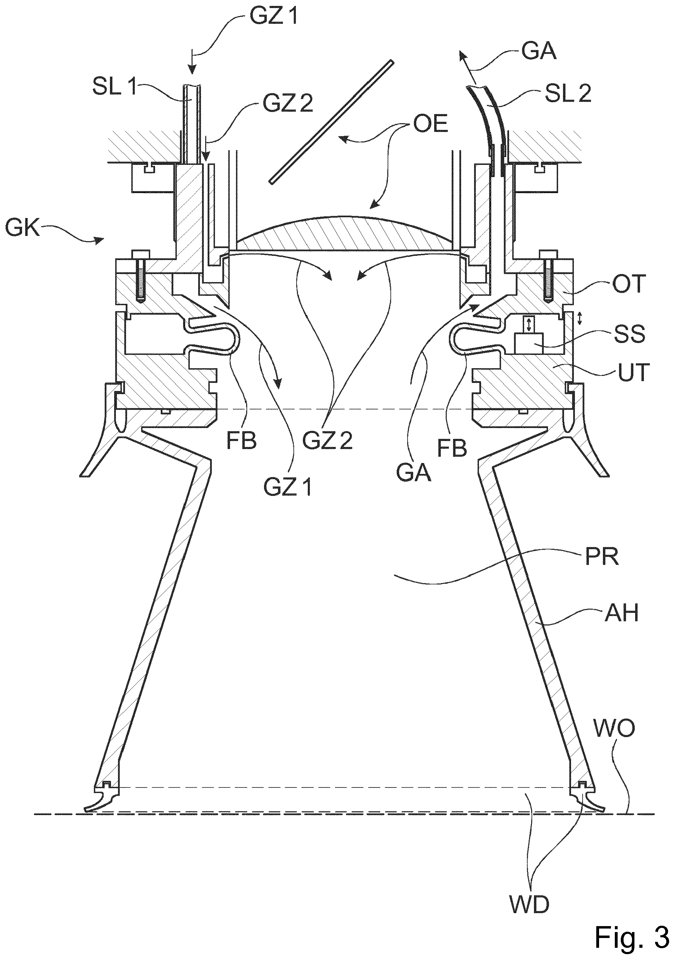

In Fig. 3 ist schematisch ein Schnitt durch den Gerätekopf GK mit der Abdichthaube AH gezeigt. Dabei ist der Gerätekopf GK, der insbesondere laseraktive Elemente, Steuerungselektronik, Bedienelemente und dergleichen enthalten kann, lediglich angedeutet. In dem Gerätekopf GK ist vorteilhafterweise ein optisches System mit optischen Elementen OE vorgesehen, die beispielsweise in Form eines gesteuert kippbaren Kippspiegels zur Strahlumlenkung und als Fokussierlinse zum Fokussieren eines Laserstrahls auf eine Werkstückoberfläche WO enthalten können. Ein Laserbearbeitungsgerät LB mit einem derartigen Gerätekopf GK ist an sich aus dem Stand der Technik bekannt.

Der durch den Laserstrahl zu bearbeitende Flächenbereich der Werkstückoberfläche WO ist im Betrieb des Laserbearbeitungsgeräts LB durch eine Abdichthaube AH seitlich abgeschlossen. An der der Werkstückoberfläche WO zuweisenden Anlagekante der Abdichthaube AH kann vorteilhafterweise eine weichelastische umlaufende Ringdichtung WD vorgesehen sein. Die Abdichthaube AH umgibt somit einen Prozessraum PR oberhalb der Werkstückoberfläche WO und begrenzt diesen seitlich.

Der Gerätekopf GK weist darüber hinaus ein Oberteil OT und ein relativ zu diesem verschiebbares Unterteil UT auf, das mit der Abdichthaube AH verbunden sein kann. Das Oberteil OT kann gegen das Unterteil UT beispielsweise über Federbalge FB in axialer Richtung verschiebbar sein. Zwischen dem Oberteil OT und dem Unterteil UT ist ein Sicherheitsschalter SS angebracht, der das Aufsetzen des Gerätekopfes GK auf der Werkstückoberfläche WO detektieren kann, um einen Beschriftungsvorgang oder dergleichen auszulösen.

Im Bereich des Oberteils OT sind darüber hinaus mehrere Öffnungen vorgesehen, über die Gase oder Gasgemische gezielt eingeleitet werden, wie nachfolgend erläutert werden wird.

Die erste Schlauchleitung SL1 ist als erste Gaszuführung GZ1 mit einer Öffnung verbunden. Die erste Gaszuführung GZ1 füllt damit den Prozessraum PR über die erste Schlauchleitung SL1 mit einem ersten Gas oder Gasgemisch. Erfindungsgemäß ist auf der gegenüberliegenden Seite eine Gasabführöffnung GA vorgesehen, die das Gas oder Gasgemisch aus dem Prozessraum PR über die zweite Schlauchleitung SL2 abführt. Erfindungsgemäß sind oberhalb der beiden Öffnungen zur ersten Gaszuführung GZ1 und Gasabführung GA zweite Gaszuführungen GZ2 angeordnet, die über den Schlauch SC mit Luft versorgt werden.

Die erste Gaszuführung GZ1 dient üblicherweise für die Zuführung von Stickstoff oder Argon. Demnach wird der Prozessraum PR durch Einleiten von Stickstoff als erstem Gas mit einer oxidfreien Atmosphäre versehen, wobei das Hinzuführen von Luft als zweitem Gas oder Gasgemisch über die zweite Gaszuführung GZ2 einen entsprechenden Gegendruck erzeugt, so dass das erste Gas im Prozessraum PR verbleibt. Eventuelle Verunreinigungen beziehungsweise entstehende Wärme werden über die Gasabführöffnung GA vom Gerätekopf GK abgeführt.

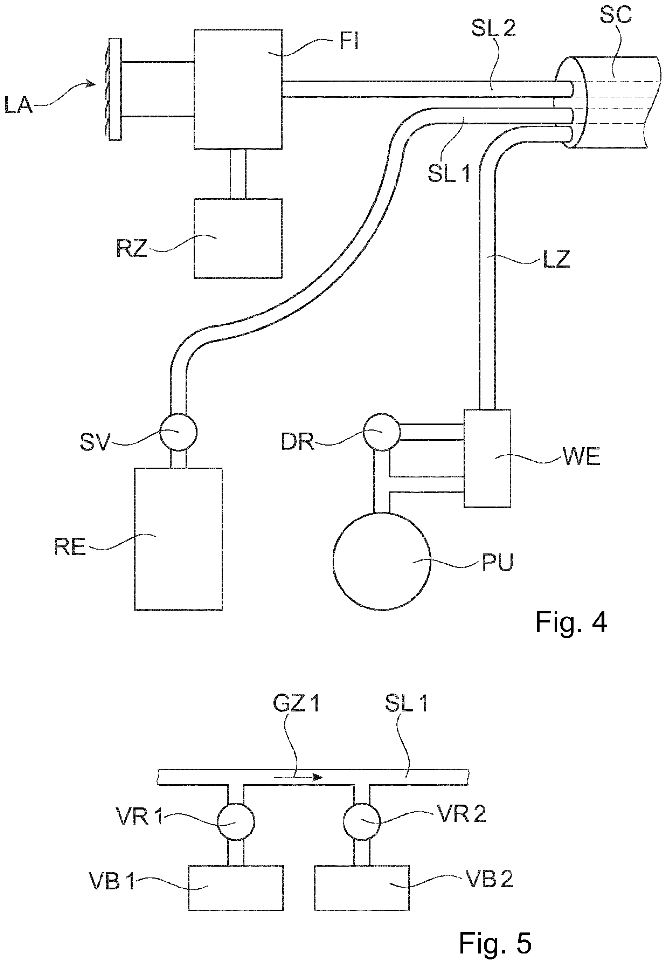

In Fig. 4 ist der schematische Aufbau innerhalb der Basisstation BS bezüglich der ersten und zweiten Schlauchleitung sowie der Zuleitung zum Schlauch SC näher verdeutlicht. Die erste Schlauchleitung SL1 wird über ein Reservoir RE mit Stickstoff versorgt. Die Zuführung in die ersten Schlauchleitung SL1 kann dabei über ein Sicherheitsventil oder Relais SV erfolgen. Anstelle eines Reservoirs RE, das beispielsweise eine druckbeaufschlagte Flasche sein kann, ist es auch möglich, eine externe Zuführung oder einen Gasgenerator zu verwenden. Die erste Schlauchleitung SL1 wird im Inneren des Schlauchs SC zum Gerätekopf GK geführt.

Die Zuführung von Luft über den Luftzuführungsschlauch LZ an den Schlauch SC erfolgt über eine Weiche WE, aus der zum einen die Zuführung direkt über eine Pumpe PU oder aber druckreduziert über eine Druckreduziereinheit DR mit Umgebungsluft erfolgen kann. Über die Druckreduziereinheit DR wird der oben beschriebene Gegendruck eingestellt. Der Luftzuführungsschlauch LZ kann selbstverständlich auch mit einem zum Schlauch SC gleichen Durchmesser ausgeführt sein, wobei die erste Schlauchleitung SL1 und/oder die zweite Schlauchleitung SL2 auch seitlich in den Schlauch SC eingeführt werden können.

Die zweite Schlauchleitung SL2, die als Gasabführleitung GA im Inneren des Schlauchs SC zu dem Gerätekopf GK geführt ist, stellt eine Verbindung mit dem Luftauslass LA her, die, wie in Fig. 4 gezeigt ist, über ein Filter FI erfolgen kann. Ebenso ist es denkbar, eine Recyclingeinheit oder Auffangeinheit RZ vorzusehen, die bestimmte Fluide oder Feststoffe aus der Gasabführleitung GA entfernen kann und diese nicht über den Luftauslass LA an die Umgebung weiterleitet.

In Fig. 5 ist eine weitere Ausführungsform der Erfindung gezeigt. Hier wird in den Strom der ersten Schlauchleitung SL1 ein erster Vorratsbehälter VB1 über eine Verriegelung VR1 zugeschaltet. Aufgrund des Gasstroms innerhalb der Gaszuführeinrichtung GZ1 werden insbesondere auf einfache Weise Nanopartikel dem Gasstrom in der ersten Schlauchleitung SL1 beigemischt. In weiteren Ausführungsformen ist es möglich, auch einen zweiten Vorratsbehälter VB2 vorzusehen, der über eine zweite Verriegelung VR2 zuschaltbar ist. Über einen oder mehrere Vorratsbehälter VB2 ist es möglich, eine oder mehrer Farben bei der Laserbeschriftung auf der Werkstückoberfläche gezielt auszuwählen und eine farbige Beschriftung vorzunehmen.

Die Verwendung von Stickstoff oder Argon als erstes Gas ermöglicht eine oxidfreie Prozessführung, wodurch eine tiefschwarze Laserbeschriftung erzeugt werden kann. Demnach ist es möglich, beispielsweise Stahloberflächen oxidfrei entweder mit schwarzer Beschriftung oder mit farbiger Beschriftung zu versehen, was sowohl bei hygieneempfindlichen Bauteilen als auch bei optisch ansprechenden Anwendungen völlig neue Anwendungsmöglichkeiten schafft.

Die vorstehend und die in den Ansprüchen angegebenen sowie die den Abbildungen entnehmbaren Merkmale sind sowohl einzeln als auch in verschiedener Kombination vorteilhaft realisierbar.

## Patentansprüche

1. Laserbearbeitungsgerät (LB) zur Beschriftung der Oberfläche (WO) eines Werkstücks mittels eines Laserstrahls umfassend:
- einen Gerätekopf (GK) mit einer optischen Einheit (OE) zur Abbildung eines Laserstrahls auf eine Werkstückoberfläche (WO),
- eine Basisstation (BS), die über elektrische und fluidführende Versorgungsleitungen den Gerätekopf (GK) mit Betriebsmitteln versorgt,
- eine Abdichthaube (AH), welche an dem Gerätekopf (GK) gehalten und mit einer umlaufenden Anlagekante an die Werkstückoberfläche (WO) anlegbar ist, und
- einer Sicherheitsschaltereinrichtung (SS), welche durch Andrücken der Abdichthaube (AH) an die Werkstückoberfläche (WO) betätigbar ist, **dadurch gekennzeichnet, dass** das Laserbearbeitungsgerät (LB) weiterhin eine erste und zweite Gaszuführeinrichtung (GZ1, GZ2) sowie eine Gasabführeinrichtung (GA) umfasst,
wobei 2. 2. die Öffnungen zur zweiten Gaszuführeinrichtung (GZ2) oberhalb der Öffnung zur ersten Gaszuführeinrichtung (GZ1) im Gerätekopf angeordnet sind,
wobei die erste Gaszuführeinrichtung (GZ1) geeignet ist, ein erstes Gas oder Gasgemisch in ein seitlich von der Abdichthaube begrenztes Volumen oberhalb der Werkstückoberfläche (WO) zuzuführen,
wobei die zweite Gaszuführeinrichtung (GZ2) geeignet ist, ein zweites Gas oder Gasgemisch in einen Bereich oberhalb des von der Abdichthaube (AH) begrenzten Volumens zuzuführen,
und die zweite Gaszuführeinrichtung (GZ2) geeignet ist, das zweite Gas oder Gasgemisch zur Bildung eines Gegendrucks gegen das von der ersten Gaszuführeinrichtung (GZ1) auf die Werkstückoberfläche zuführbare erste Gas oder Gasgemisch zuzuführen, so dass das erste Gas oder Gasgemisch in Richtung der Werkstückoberfläche (WO) gedrückt wird,
wobei das zweite Gas oder Gasgemisch zur Kühlung des Laserbearbeitungsgerätes (LB) dienen kann, und mittels der Gasabführeinrichtung (GA) im Bereich des von der Abdichthaube (AH) begrenzten Volumens das erste und/oder das zweite Gas oder Gasgemisch abführbar ist,
wobei die Öffnung zur Gasabführeinrichtung (GA) der Öffnung zur ersten Gaszuführeinrichtung (GZ1) gegenüberliegend und unterhalb der Öffnungen zur zweiten Gaszuführeinrichtung (GZ2) Z im Gerätekopf angeordnet ist.

2. Laserbearbeitungsgerät (LB) nach Anspruch 1, bei dem das erste Gas oder Gasgemisch Sauerstofffrei ist oder ein inertes Gas oder Gasgemisch, insbesondere Stickstoff, Argon oder dergleichen umfasst.

3. Laserbearbeitungsgerät (LB) nach Anspruch 1 oder 2, bei dem das zweite Gas oder Gasgemisch Luft umfasst.

4. Laserbearbeitungsgerät (LB) nach einem der Ansprüche 1 bis 3, bei dem die erste Gaszuführeinrichtung (GZ1) mit einer ersten Schlauchleitung (SL1) und die Gasabführeinrichtung (GA) mit einer zweiten Schlauchleitung (SL2) versehen sind, die im Inneren eines als Zuführung des zweiten Gases oder Gasgemisches dienenden Schlauchs (SC) zwischen Basisstation (BS) und Gerätekopf (GK) geführt sind.

5. Laserbearbeitungsgerät (LB) nach Anspruch 4, bei dem die erste Schlauchleitung (SL1) mit einem in der Basisstation (BS) angeordneten Reservoir (RE) oder Gasgenerator oder mit einem Anschluss für ein externes Reservoir verbunden ist.

6. Laserbearbeitungsgerät (LB) nach einem der Ansprüche 4 bis 5, bei dem der Schlauch (SC) mit einer in der Basisstation (BS) angeordneten Pumpe (PU) verbunden ist.

7. Laserbearbeitungsgerät (LB) nach Anspruch 6, bei dem die Pumpe (PU) bidirektional und/oder gepulst ausgeführt ist.

8. Laserbearbeitungsgerät (LB) nach Anspruch 6 oder 7, bei dem zwischen der Pumpe (PU) und dem Schlauch (SC) eine zuschaltbare Druckreduziereinheit angeordnet ist.

9. Laserbearbeitungsgerät (LB) nach einem der Ansprüche 1 bis 8, bei dem eine Betätigung der Sicherheitsschaltereinrichtung (SS) ein Spülen des von der Abdichthaube (AH) begrenzten Volumens mit dem ersten Gas oder Gasgemisch und/oder dem zweiten Gas oder Gasgemisch bewirkt.

10. Laserbearbeitungsgerät (LB) nach einem der Ansprüche 4 bis 9, bei dem die erste Schlauchleitung (SL1) an wenigstens einem Vorratsbehälter (VB1) entlang geführt ist, so dass das vorbeiströmende erste Gas oder Gas-gemisch aufgrund des dadurch entstehenden Unterdrucks beim Vorbeiströmen am Vorratsbehälter (VB1) Feststoffpartikel, vorzugsweise Nanopartikel, mitführen kann, wobei der Vorratsbehälter (VB1) über eine Verriegelung (VR1) zuschaltbar ist.

11. Laserbearbeitungsgerät (LB) nach Anspruch 10, bei dem mehrere Vorratsbehälter (VB1, VB2, ...) über mehrere Verriegelungen (VR1, VR2, ...) zuschaltbar mit der ersten Schlauchleitung (SL1) verbindbar sind.

12. Laserbearbeitungsgerät (LB) nach einem der Ansprüche 4 bis 11, bei dem die zweite Schlauchleitung (SL2) eine Filtereinheit (FE) umfasst, die mit einem Luftauslass (LA) an der Basisstation (BS) verbunden ist.

13. Laserbearbeitungsgerät (LB) nach einem der Ansprüche 4 bis 12, bei dem die zweite Schlauchleitung (SL2) eine Auffangeinheit (RZ) umfasst, die ein Fluid oder Feststoffpartikel vor Zuführen an einen Luftauslass an der Basisstation (BE) entfernt.

14. Laserbearbeitungsgerät (LB) nach einem der Ansprüche 11 bis 13, bei dem die Laserbearbeitung durch die Verriegelungen (VR1, VR2) der Vorratsbehälter (VB1, VB2, ...) so steuerbar ist, dass für eine Beschriftung eine Farbe auswählbar ist.

15. Laserbearbeitungsgerät (LB) nach einem der Ansprüche 11 bis 14, bei dem die Laserbearbeitung durch die Verriegelungen (VR1, VR2) der Vorratsbehälter (VB1, VB2, ...) so steuerbar ist, dass für eine Beschriftung mehrere Farben auswählbar sind.

16. Laserbearbeitungsgerät (LB) nach einem der Ansprüche 4 bis 15, bei dem die erste Schlauchleitung (SL1) mit einem Sicherheitsventil oder Relais (SV) versehen ist.

## Claims

1. Laser processing apparatus (LB) for labeling the surface (WO) of a workpiece using a laser beam, comprising:
- an apparatus head (GK) having an optical unit (OE) for imaging a laser beam onto a workpiece surface (WO);
- a base station (BS) which supplies the apparatus head (GK) with resources via electrical and fluid-carrying supply lines;
- a sealing cap (AH) which is held on the apparatus head (GK) and a circumferential contact edge of which can be placed on the workpiece surface (WO); and
- a safety switch device (SS) which can be actuated by pressing the sealing cap (AH) against the workpiece surface (WO), **characterized in that** the laser processing apparatus (LB) also comprises a first and second gas supply device (GZ1, GZ2) and a gas discharge device (GA),
the openings to the second gas supply device (GZ2) being arranged above the opening to the first gas supply device (GZ1) in the apparatus head,
the first gas supply device (GZ1) being suitable for supplying a first gas or gas mixture into a volume above the workpiece surface (WO), which volume is laterally delimited by the sealing cap,
the second gas supply device (GZ2) being suitable for supplying a second gas or gas mixture into an region above the volume delimited by the sealing cap (AH),
and the second gas supply device (GZ2) being suitable for supplying the second gas or gas mixture in order to form a counter pressure against the first gas or gas mixture that can be supplied to the workpiece surface by the first gas supply device (GZ1), such that the first gas or gas mixture is pressed toward the workpiece surface (WO),
it being possible for the second gas or gas mixture to be used for cooling the laser processing apparatus (LB), and it being possible to discharge the first and/or the second gas or gas mixture by means of the gas discharge device (GA) in the region of the volume delimited by the sealing cap (AH), the opening to the gas discharge device (GA) being arranged opposite the opening to the first gas supply device (GZ1) and below the openings to the second gas supply device (GZ2) in the apparatus head.

2. Laser processing apparatus (LB) according to claim 1, wherein the first gas or gas mixture is free of oxygen or comprises an inert gas or gas mixture, in particular nitrogen, argon or the like.

3. Laser processing apparatus (LB) according to either claim 1 or claim 2, wherein the second gas or gas mixture comprises air.

4. Laser processing apparatus (LB) according to any of claims 1 to 3, wherein the first gas supply device (GZ1) is provided with a first hose line (SL1) and the gas discharge device (GA) is provided with a second hose line (SL2), which hose lines are guided between the base station (BS) and the apparatus head (GK) inside a hose (SC) which acts as a supply of the second gas or gas mixture.

5. Laser processing apparatus (LB) according to claim 4, wherein the first hose line (SL1) is coupled to a reservoir (RE) or gas generator arranged in the base station (BS) or to a supply point for an external reservoir.

6. Laser processing apparatus (LB) according to either claim 4 or claim 5, wherein the hose (SC) is coupled to a pump (PU) arranged in the base station (BS).

7. Laser processing apparatus (LB) according to claim 6, wherein the pump (PU) is bidirectional and/or pulsed.

8. Laser processing apparatus (LB) according to either claim 6 or claim 7, wherein a connectable pressure reducing unit is arranged between the pump (PU) and the hose (SC).

9. Laser processing apparatus (LB) according to any of claims 1 to 8, wherein actuation of the safety switch device (SS) causes the volume delimited by the sealing cap (AH) to be flushed with the first gas or gas mixture and/or the second gas or gas mixture.

10. Laser processing apparatus (LB) according to any of claims 4 to 9, wherein the first hose line (SL1) is guided along at least one storage container (VB1) such that the first gas or gas mixture flowing past can carry solid particles, preferably nanoparticles, due to the resulting negative pressure when flowing past the storage container (VB1), the storage container (VB1) being connectable via a locking mechanism (VR1).

11. Laser processing apparatus (LB) according to claim 10, wherein a plurality of storage containers (VB1, VB2, ...) can be connectably coupled to the first hose line (SL1) via a plurality of locking mechanisms (VR1, VR2, ...).

12. Laser processing apparatus (LB) according to any of claims 4 to 11, wherein the second hose line (SL2) comprises a filter unit (FE) which is coupled to an air outlet (LA) at the base station (BS).

13. Laser processing apparatus (LB) according to any of claims 4 to 12, wherein the second hose line (SL2) comprises a collecting unit (RZ) which removes a fluid or solid particles before supplying to an air outlet at the base station (BE).

14. Laser processing apparatus (LB) according to any of claims 11 to 13, wherein the laser processing, by means of the locking mechanisms (VR1, VR2) of the storage container (VB1, VB2, ...), can be controlled such that a color can be selected for a label.

15. Laser processing apparatus (LB) according to any of claims 11 to 14, wherein the laser processing, by means of the locking mechanisms (VR1, VR2) of the storage container (VB1, VB2, ...), can be controlled such that a plurality of colors can be selected for a label.

16. Laser processing apparatus (LB) according to any of claims 4 to 15, wherein the first hose line (SL1) is provided with a safety valve or relay (SV).

## Revendications

1. Appareil de traitement laser (LB) destiné à marquer la surface (WO) d'une pièce au moyen d'un faisceau laser, comprenant :
- une tête d'appareil (GK) comportant une unité optique (OE) destinée à reproduire un faisceau laser sur une surface de pièce (WO),
- une station de base (BS) qui fournit des moyens de fonctionnement à la tête d'appareil (GK) par l'intermédiaire de lignes d'alimentation électriques et d'amenée de fluide,
- un capot d'étanchéité (AH), qui est maintenu sur la tête d'appareil (GK) et dont un bord de contact périphérique peut être appliqué sur la surface de pièce (WO), et
- un dispositif de commutateur de sécurité (SS), qui est actionnable en pressant le capot d'étanchéité (AH) contre la surface de pièce (WO),
**caractérisé en ce que** l'appareil de traitement laser (LB) comprend en outre un premier et un second dispositif d'alimentation en gaz (GZ1, GZ2) ainsi qu'un dispositif d'évacuation de gaz (GA),
les ouvertures du second dispositif d'alimentation en gaz (GZ2) étant disposées au-dessus de l'ouverture du premier dispositif d'alimentation en gaz (GZ1) dans la tête d'appareil,
le premier dispositif d'alimentation en gaz (GZ1) étant approprié pour alimenter un premier gaz ou mélange gazeux dans un volume au-dessus de la surface de pièce (WO) qui est délimité latéralement par le capot d'étanchéité,
le second dispositif d'alimentation en gaz (GZ2) étant approprié pour alimenter un second gaz ou mélange gazeux dans une zone au-dessus du volume délimité par le capot d'étanchéité (AH),
et le second dispositif d'alimentation en gaz (GZ2) étant approprié pour alimenter le second gaz ou mélange gazeux pour former une contre-pression contre le premier gaz ou mélange gazeux pouvant être alimenté à la surface de la pièce par le premier dispositif d'alimentation en gaz (GZ1), de telle sorte que le premier gaz ou mélange gazeux est comprimé en direction de la surface de pièce (WO),
le second gaz ou mélange gazeux pouvant servir à refroidir l'appareil de traitement laser (LB), et le premier et/ou le second gaz ou mélange gazeux pouvant être évacué au moyen du dispositif d'évacuation de gaz (GA) dans la zone du volume délimité par le capot d'étanchéité (AH), l'ouverture du dispositif d'évacuation de gaz (GA) étant disposée en face de l'ouverture du premier dispositif d'alimentation en gaz (GZ1) et au-dessous des ouvertures du second dispositif d'alimentation en gaz (GZ2) dans la tête d'appareil.

2. Appareil de traitement laser (LB) selon la revendication 1, dans lequel le premier gaz ou mélange gazeux est exempt d'oxygène ou comprend un gaz inerte ou un mélange gazeux, notamment de l'azote, de l'argon ou un gaz similaire.

3. Appareil de traitement laser (LB) selon la revendication 1 ou 2, dans lequel le second gaz ou mélange gazeux comprend de l'air.

4. Appareil de traitement laser (LB) selon l'une des revendications 1 à 3, dans lequel le premier dispositif d'alimentation en gaz (GZ1) est muni d'une première conduite flexible (SL1), et le dispositif d'évacuation de gaz (GA) est muni d'une seconde conduite flexible (SL2), lesquelles sont guidées à l'intérieur d'un tuyau (SC) servant d'alimentation du second gaz ou mélange gazeux entre la station de base (BS) et la tête d'appareil (GK).

5. Appareil de traitement laser (LB) selon la revendication 4, dans lequel la première conduite flexible (SL1) est reliée à un réservoir (RE) ou à un générateur de gaz disposé dans la station de base (BS), ou à un raccordement pour un réservoir externe.

6. Appareil de traitement laser (LB) selon l'une des revendications 4 et 5, dans lequel le tuyau (SC) est relié à une pompe (PU) disposée dans la station de base (BS).

7. Appareil de traitement laser (LB) selon la revendication 6, dans lequel la pompe (PU) est bidirectionnelle et/ou pulsée.

8. Appareil de traitement laser (LB) selon la revendication 6 ou 7, dans lequel une unité de réduction de pression pouvant être connectée est disposée entre la pompe (PU) et le tuyau (SC).

9. Appareil de traitement laser (LB) selon l'une des revendications 1 à 8, dans lequel l'actionnement du dispositif de commutateur de sécurité (SS) provoque le rinçage du volume délimité par le capot d'étanchéité (AH) avec le premier gaz ou mélange gazeux et/ou le second gaz ou mélange gazeux.

10. Appareil de traitement laser (LB) selon l'une des revendications 4 à 9, dans lequel la première conduite flexible (SL1) est guidée le long d'au moins un récipient de stockage (VB1), de telle sorte que le premier gaz ou mélange gazeux en écoulement peut transporter des particules solides, de préférence des nanoparticules, vers le récipient de stockage (VB1) du fait de la pression négative ainsi produite lors de l'écoulement, le récipient de stockage (VB1) pouvant être connecté par l'intermédiaire d'un verrouillage (VR1).

11. Appareil de traitement laser (LB) selon la revendication 10, dans lequel une pluralité de récipients de stockage (VB1, VB2,...) peuvent être reliés à la première conduite flexible (SL1) par l'intermédiaire d'une pluralité de verrouillages (VR1, VR2,...).

12. Appareil de traitement laser (LB) selon l'une des revendications 4 à 11, dans lequel la seconde conduite flexible (SL2) comprend une unité de filtrage (FE) qui est reliée à une sortie d'air (LA) au niveau de la station de base (BS).

13. Appareil de traitement laser (LB) selon l'une des revendications 4 à 12, dans lequel la seconde conduite flexible (SL2) comprend une unité de collecte (RZ) qui élimine un fluide ou des particules solides avant leur alimentation vers une sortie d'air au niveau de la station de base (BE).

14. Appareil de traitement laser (LB) selon l'une des revendications 11 à 13, dans lequel le traitement laser peut être commandé par les verrouillages (VR1, VR2) des récipients de stockage (VB1, VB2,...) de telle sorte qu'une couleur peut être sélectionnée pour le marquage.

15. Appareil de traitement laser (LB) selon l'une des revendications 11 à 14, dans lequel le traitement laser peut être commandé par les verrouillages (VR1, VR2) des récipients de stockage (VB1, VB2,...) de telle sorte que plusieurs couleurs peuvent être sélectionnées pour le marquage.

16. Appareil de traitement laser (LB) selon l'une des revendications 4 à 15, dans lequel la première conduite flexible (SL1) est munie d'une soupape de sécurité ou d'un relais (SV).
